# EUROPEAN PATENT SPECIFICATION

(11) **EP 1 741 958 B1**
(45) Date of publication and mention of the grant of the patent: **12.01.2011**
(21) Application number: 06711957.8
(22) Date of filing: 19.01.2006
(51) Int. Cl.: F16H 53/02

(54) **cam shaft and manufacturing method for a cam shaft**
Nockenwelle und Herstellverfahren für eine Nockenwelle
Arbre à cames et procés de fabrication d'un arbre à cames

(30) Priority: 20.01.2005 JP 2005012597
(43) Date of publication of application: 10.01.2007
(73) Proprietor: OTICS Corporation, Nakabata-cho Nishio-shi Aichi 444-0392 (JP); Finesinter Co., Ltd., Tokyo 171-0022 (JP)
(72) Inventor: YAMAMOTO, Tamotsu c/o OTICS Corporation, Nishio-shi Aichi, 444-0392 (JP); ISOGAI, Eiji c/o OTICS Corporation, Nishio-shi Aichi, 444-0392 (JP); KINOSHITA, Kazumasa c/o OTICS Corporation, Nishio-shi Aichi, 444-0392 (JP); NISHIMURA, Kunihiro c/o FINE SINTER Co., Ltd., Aichi, 486-0812 (JP); SATO, Hidekazu c/o FINE SINTER Co., Ltd., Aichi, 486-0812 (JP)
(74) Representative: Müller-Boré & Partner Patentanwälte
(86) International application number: PCT/JP2006/300711
(87) International publication number: WO 2006/077913

(56) References cited:
- JP-A- 2000 329 214
- JP-A- 2000 329 214
- JP-A- 2001 293 531
- JP-A- 2001 293 531
- JP-A- 2002 257 149
- JP-A- 2002 257 149

## Description

### Technical Field

The present invention relates to a rotating assembly in which a rotating member is fastened onto a shaft and its manufacturing method.

### Background Art

There is a conventional art in which an inner hole having a stepped portion is formed on a cam piece, a pipe-shaped shaft is inserted into this inner hole and then, a high-pressure fluid is injected into the shaft to expand it outward so that the shaft is accommodated in the stepped portion of the inner hole so as to fix the cam piece onto the shaft (See Patent Document 1, for example). According to this technique, a fastening strength between the cam piece and the shaft can be improved by a portion accommodated in the stepped portion of the shaft as a hook.

Patent Document 1: Japanese Patent Laid-Open No. 2003-314576

However, it is necessary to inject a high-pressure fluid into a shaft in order to form a camshaft by the above-mentioned conventional art, which requires a large amount of labor and many processes as well as equipment such as a high-pressure fluid source, a shaft sealing apparatus or the like for the manufacture. There is a method in which, after expanding a diameter of an inner hole by heating the camshaft without injecting high pressure, the shaft is inserted into the inner hole and cooled for fixation. But the inner hole is pressed by the shaft and the surface shape of the cam piece is affected by that and changed, and it is necessary to polish the surface of the cam piece in order to correct the problem.

JP 2001-293531 A discloses a rotating assembly comprising the features according to the preamble of claim 1 and claim 5, respectively.

The present invention was made based on the above circumstances and has an object to provide a rotating assembly which can fix a rotating member easily onto a shaft and its manufacturing method.

The object above is achieved by the rotating assembly according to independent claim 1 and by its manufacturing method according to independent claim 5. The dependent claims concern particular embodiments of the invention.

In this way, one of the inner hole and the outer circumferential surface of the shaft is pressed and raised by the other and enters the grooves so that both of them are fixed. Thus, the portions having entered into the grooves serve as a hook, and the rotating member can be firmly fixed onto the shaft easily. Moreover, before attaching the rotating member onto the shaft, an area of the inner hole brought into contact with a gauge or the like is reduced by the presence of the grooves when inserting a gauge for inspection or the like into the inner hole. Therefore, a resistance at insertion can be reduced, and inspection workability can be improved.

Further, when the cam piece is fixed to the driving shaft, one of the inner hole and the outer circumferential surface of the driving shaft enters the groove, which relaxes a pressing force of the driving shaft applied to the cam piece and prevents shape change of the cam profile.

According to the characterizing portion of claim 1 and claim 5 , at a portion in the inner hole positioned inward of the location where the circumferential-shaped outer circumferential surface continues to the cam profile, a large-diameter escape portion is formed to prevent contact with the outer circumferential surface of the driving shaft when the cam piece is fastened to the driving shaft.

By this, the shape of the location of an outline of the cam piece, which is close to the inner hole and continuing to the cam profile for controlling a work amount of a valve member of an engine, can be prevented from being changed by fastening of the cam piece to the driving shaft.

Preferably, a hardness of the inner hole of the cam piece is higher than the hardness of the outer circumferential surface of the driving shaft.

By this, when the cam piece is fixed to the driving shaft, the driving shaft is raised and easily enters the grooves, by which both are firmly fixed. And since deformation on the cam piece side is small, influence on the shape of the cam profile can be reduced.

According to the rotating assembly and its manufacturing method of the present invention, the rotating member can be easily fixed onto the shaft.

### Brief Description of the Drawings

Figure 1 is a partial view of an appearance of a camshaft;
Figure 2 is a front view of the cam piece shown in Figure 1;
Figure 3 is an A-A sectional view of Figure 1;
Figure 4 is an enlarged view of an essential part of Figure 3;
Figure 5 is an enlarged view of an essential part showing a variation 1 of the grooves (A), an enlarged view of an essential part showing a variation 2 (B), and an enlarged view of an essential part showing a variation 3 (C);

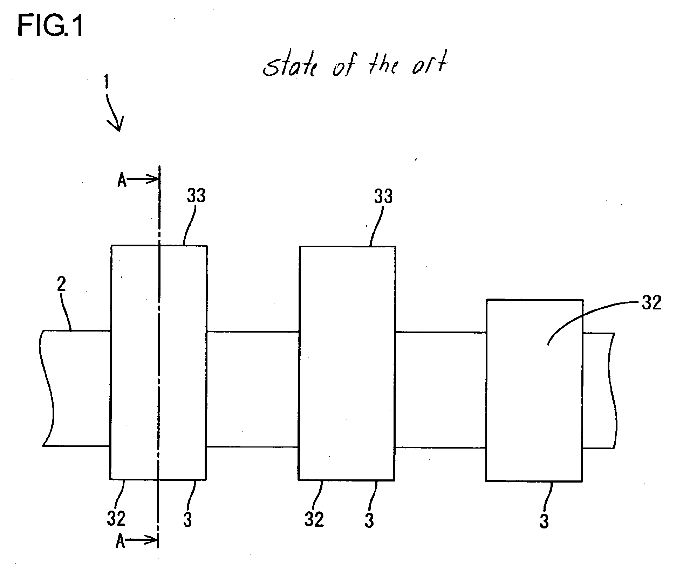

Fig. 1 - 5 do not show the invention according to independent claims 1 and 5.

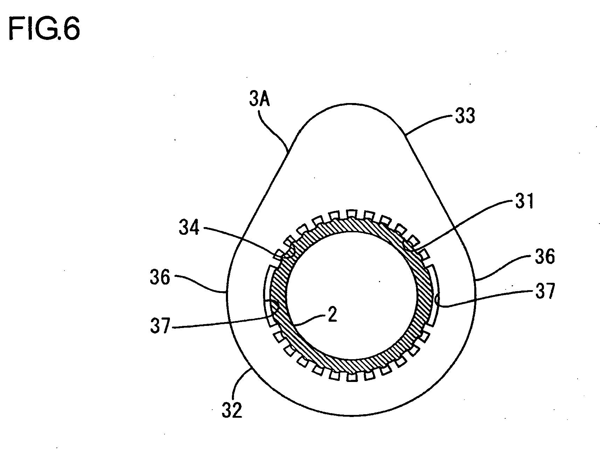

Figure 6 is a sectional view of the camshaft of the invention according to independent claims 1 and 5.

### Description of Symbols

- 1: Camshaft
- 2: Driving shaft
- 3: Cam piece
- 31: Inner hole
- 32: Circumferential-shaped outer circumferential surface
- 33: Cam profile
- 34: Groove
- 36: Raised portion
- 37: Escape portion

### Best Mode for Carrying Out the Invention

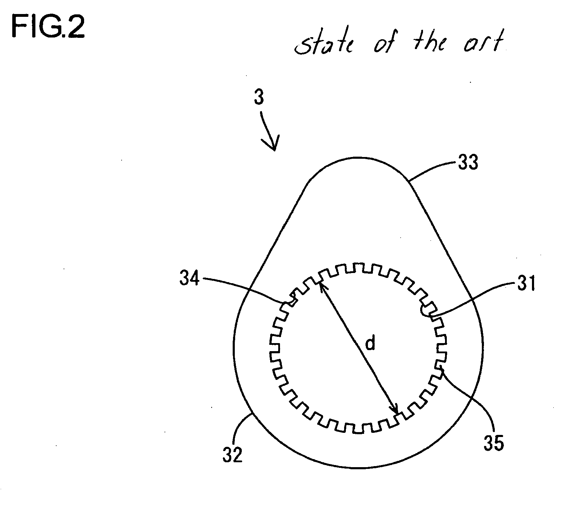

As shown in Figure 1, a camshaft 1, which is a rotating assembly, has a plurality of cam pieces 3 fastened and formed on a driving shaft 2. The driving shaft 2 is formed by a pipe material made of a carbon steel or an alloy steel such as STKM material. The cam piece 3 is formed by a sintered material obtained by pressurizing and molding a metal powder of a carbon steel or an alloy steel containing Cr, V in a die and sintering it at a high temperature. As shown in Figure 2, an inner hole 31 pierces the inside of the cam piece 3, and an inner diameter d of the inner hole 31 is formed smaller than an outer diameter of an insertion portion of the driving shaft 2. Moreover, in the cam piece 3, a circumferential-shaped outer circumferential surface 32 is formed surrounding a part of the inner hole 31, and furthermore, a cam profile 33 projecting outward is formed continuing to the outer circumferential surface 32.

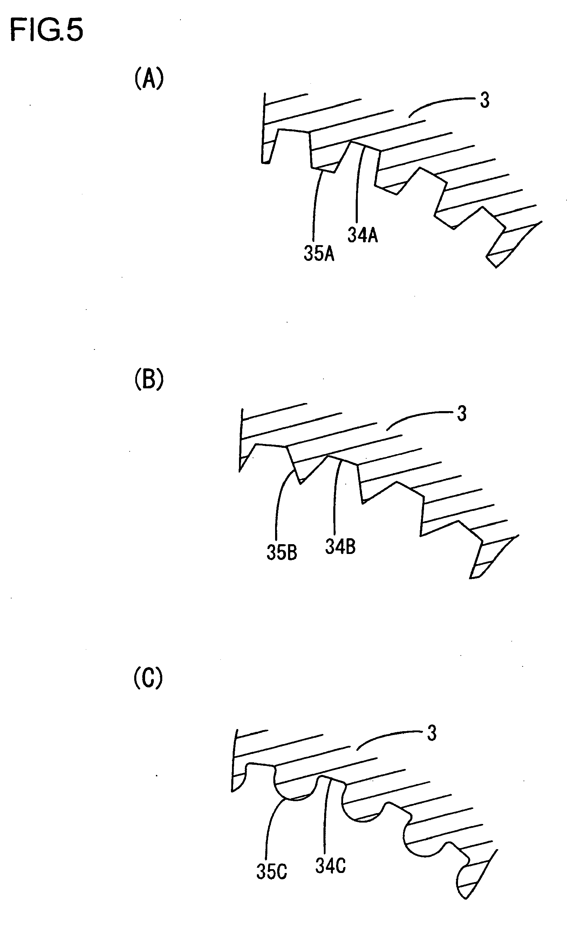

Plurality of grooves 34 extending in a direction (which will be described later) in which the driving shaft 2 is inserted into the cam piece 3 are formed on the inner hole 31. The grooves 34 are formed so that they are arranged evenly on the inner hole 31. In the cam piece 3 shown in Figure 2, since a section of each of projection portions 35 arranged between the grooves 34 is formed in a rectangular shape in cross section, the section of the groove 34 is also formed in the rectangular shape in cross section. But by making it as a projection portion 35A with a trapezoidal section as shown in Figure 5(A), a projection portion 35B with a triangular section as shown in Figure 5(B) or a projection portion 35C with a circular section as shown in Figure 5(C), a similar effect can be obtained even if the sectional shape of the grooves 34A, 34B, 34C arranged between each of them is changed as appropriate. A hardness of at least the inner hole 31 of the cam piece 3 is not less than Hv 350, though not limited to this, which is formed higher than the hardness of the outer circumferential surface of the driving shaft 2 (Hv 150 to 200). The groove 34 may be formed at the same time with the outer shape at molding of the cam piece 3, but the cam piece 3 may be sintered after forming by machining after molding of the outer shape of the cam piece 3.

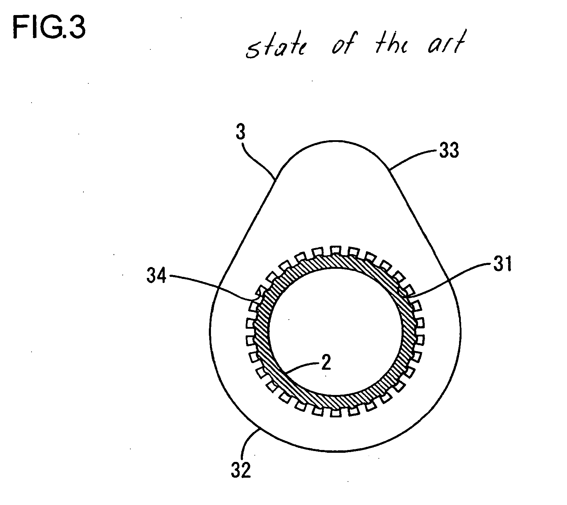

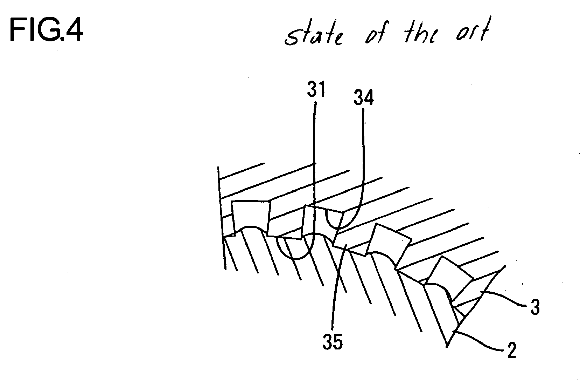

Next, a method for fastening the cam piece 3 onto the driving shaft 2 will be described. First, the cam piece 3 with a plurality of grooves 34 formed in the inner hole 31 is heated at a high temperature of not less than 200°C so as to expand the inner diameter d of the inner hole 31. In this state, the driving shaft 2 is inserted into the inner hole 31 of the cam piece 3 in the length direction (shrink fitting). Since the diameter of the inner hole 31 has been expanded by heating, insertion of the driving shaft 2 can be carried out smoothly. Next, when the driving shaft 2 is cooled while being inserted into the inner hole 31 of the plurality of cam pieces 3, the diameter of the inner hole 31 which has been expanded is reduced again, which begins to press the outer circumferential surface of the driving shaft 2 inward. Therefore, the outer circumferential surface of the driving shaft 2 with a hardness lower than that of the inner hole 31 is pressed by the inner hole 31, portions opposite to the grooves 34 not bound by the inner hole 31 are raised outward, and each of them enters the grooves 34 (See Figures 3 and 4). By this, the driving shaft 2 and the cam piece 3 are firmly fixed to each other, and the camshaft 1 is completed. The camshaft 1 is rotatably fixed in a cylinder head in an internal combustion engine, not shown, and is rotated to control operation of an intake/exhaust valve in contact with the cam profile 33.

The outer circumferential surface of the driving shaft 2 is pressed and raised by the inner hole 31 and enters the groove 34 and both of them are fixed to each other. Thus, the portions having entered the groove 34 serve as a hook and the cam piece 3 can be firmly fixed onto the driving shaft 2 with an easy method. Also, when a gauge for inspection or the like, not shown, is to be inserted into the inner hole 31 to inspect accuracy of the inner diameter d of the inner hole 31 before mounting the cam piece 3 to the driving shaft 2, an area of the inner hole 31 in contact with the gauge or the like is reduced by the presence of the groove 34, resistance at insertion can be reduced, and inspection workability is improved. Also, when the cam piece 3 is fixed to the driving shaft 2, the driving shaft 2 enters the groove 34, and a pressing force received by the cam piece 3 from the driving shaft 2 is relaxed and the shape of the cam profile 33 is not changed.

Moreover, since the hardness of the inner hole 31 of the cam piece 3 is higher than the hardness of the outer circumferential surface of the driving shaft 2, when the cam piece 3 is fixed to the driving shaft 2, the driving shaft 2 easily enters the groove, by which both are fixed firmly and deformation on the cam piece 3 side is small. Therefore, influence on the shape of the cam profile 33 can be reduced. Furthermore, if the grooves 34 are formed on the inner hole 31 at molding of the cam piece 3, there is no need to conduct machining and the productivity can be improved.

Next, the present invention will be described referring to Figure 6. In the inner hole 31 of a cam piece 3A according to this embodiment, a plurality of grooves 34 are formed, which is similar to embodiment 1. The grooves 34 are formed in a series at a portion located inward of the cam profile 33 (upper part of the inner hole 31 in Figure 6) and a portion opposite thereto and located inward of the circumferential-shaped outer circumferential surface 32 (lower part of the inner hole 31 in Figure 6), respectively. Large-diameter escape portions 37 formed by hollowing the inner hole 31 outward are provided between the series of grooves 34 formed to be opposed to each other. The pair of escape portions 37 are opposed to each other and located inward of raised portions 36, which are portions where the circumferential-shaped outer circumferential surface 32 of the cam piece 3A continues to the cam profile 33. And the portions 37 extend circumferentially by the length of several grooves 34 so that the inner hole 31 is not brought into contact with the outer circumferential surface of the driving shaft 2 when the cam piece 3A is fastened to the driving shaft 2.

Since the large-diameter escape portions 37 are formed at the portion located inward of the raised portions 36 so that contact with the outer circumferential surface of the driving shaft 2 can be avoided when the cam piece 3A is fastened to the driving shaft 2, change of the outer shape of the raised portions 36 can be further prevented even at a position close to the inner hole 31 and susceptible to the pressing force from the driving shaft 2 by fixation of the cam piece 3A to the driving shaft 2. It is to be noted that, since the cam profile 33 is located away from the inner hole 31, its outer shape is hardly changed, and the circumferential-shaped outer circumferential surface 32 is not brought into contact with the other part and does not function as a cam surface for controlling an operation amount of a valve member of an engine. Thus, it is not necessary to provide escape portions 37 at cam profile 33.

The present invention is not limited to the embodiments described in the above description and drawings.

## Claims

1. A rotating assembly (1) in which a rotating member (3) is fixed onto a shaft (2) by inserting the shaft (2) into an inner hole (31) of the rotating member (3), wherein:
a diameter (d) of the inner hole (31) is formed smaller than an outer diameter of an insertion portion of the shaft (1), and a plurality of grooves (34) extending in the insertion direction is formed on one of the inner hole (31) and an outer circumferential surface of the shaft (1);
after the diameter (d) of the inner hole (31) is expanded by heating the rotating member (3), the shaft (2) is inserted into the inner hole (31) and cooled to reduce the diameter of the inner hole again, the other of the inner hole (31) and the outer circumferential surface of the shaft is pressed and raised by the other part and enters the grooves (34) so that both of them are fixed and formed, wherein
the rotating member (3) is a cam piece having the circumferential-shaped outer circumferential surface (32) surrounding the inner hole (31) and a cam profile (33) continuing to this outer circumferential surface (32) and projecting outward and, by inserting the driving shaft (2) into the inner hole (31), the cam piece (3) is fastened onto the inner hole (31) so as to form a camshaft (1),
**characterized in that**
at a portion in the inner hole (31) positioned inward of a location where a circumferential-shaped outer circumferential surface (32) continues to the cam profile (33), a large-diameter escape portion (37) is formed to prevent contact with the outer circumferential surface of the driving shaft (2) when the cam piece (3) is fastened to the driving shaft (2).

2. The rotating assembly according to claim 1, **characterized in that** a hardness of the inner hole (31) of the cam piece (3) is higher than the hardness of the outer circumferential surface of the driving shaft (2).

3. The rotating assembly according to claim 1 or 2, **characterized in that** the plurality of grooves (34) is formed in the inner hole (31).

4. The rotating assembly according to claim 1 or 2, **characterized in that** the plurality of grooves (34) is formed on the outer circumferential surface (32) of the driving shaft (2).

5. A manufacturing method of a rotating assembly (1) in which a rotating member (3) is fixed onto a shaft (2) by inserting the shaft (2) into an inner hole (31) of the rotating member (3), wherein:
a diameter (d) of the inner hole (31) is formed smaller than an outer diameter of an insertion portion of the shaft (2), a plurality of grooves (34) extending in the insertion direction is formed on one of the inner hole (31) and an outer circumferential surface of the shaft (2), after the diameter (d) of the inner hole (31) is expanded by heating the rotating member (3), the shaft (2) is inserted into the inner hole (31) and cooled to reduce the diameter (d) of the inner hole (31) again, the other of the inner hole and the outer circumferential surface of the shaft (2) is pressed and raised by the other part and enters the grooves (34) so that both are fixed, and
wherein the rotating member (3) is a cam piece having the circumferential-shaped outer circumferential surface (32) surrounding the inner hole (31) and a cam profile (33) continuing to this outer circumferential surface (32) and projecting outward and, by inserting the driving shaft (2) into the inner hole (31), the cam piece (3) is fastened onto the inner hole (31) so as to form a camshaft (1),
**characterized in that**
at a portion in the inner hole (31) positioned inward of a location where a circumferential-shaped outer circumferential surface (32) continues to the cam profile (33), a large-diameter escape portion (37) is formed to prevent contact with the outer circumferential surface of the driving shaft (2) when the cam piece (3) is fastened to the driving shaft (2).

6. The manufacturing method according to claim 5, wherein the cam piece (3) and the driving shaft (2) are produced such that a hardness of the inner hole (31) of the cam piece (3) is higher than the hardness of the outer circumferential surface (32) of the driving shaft (2).

7. The manufacturing method according to claim 5 or 6, **characterized in that** the plurality of grooves (34) is formed in the inner hole (31).

8. The manufacturing method according to claim 5 or 6, **characterized in that** the plurality of grooves (34) is formed on the outer circumferential surface (32) side of the driving shaft (2).

9. The manufacturing method according to any of claims 5 to 8, wherein the forming of a plurality of grooves (34) step includes forming the plurality of grooves (34) from one of a trapezoidal shape, a circular shape and a triangular shape.

## Patentansprüche

1. Drehanordnung (1), bei der ein Drehglied (3) an einer Welle (2) fixiert bzw. befestigt ist, indem die Welle (2) in ein inneres Loch (31) des Drehglieds (3) eingesetzt ist, wobei:
ein Durchmesser (d) des inneren Lochs (31) kleiner ausgebildet ist als ein Auβendurchmesser eines Einsetzabschnitts der Welle (1), und eine Mehrzahl von Nuten bzw. Rillen (34), die sich in der Einsetzrichtung erstrecken, an einem von dem inneren Loch (31) und einer Außenumfangsfläche bzw. -oberfläche der Welle (1) gebildet ist;
nachdem der Durchmesser (d) des inneren Lochs (31) durch Erwärmen des Drehglieds (3) geweitet wird, die Welle (2) in das innere Loch (31) eingesetzt und abgekühlt wird, um den Durchmesser des inneren Lochs wieder zu verringern, der andere des inneren Lochs (31) und der Außenumfangsfläche der Welle von dem anderen Teil gepresst und angehoben wird und in die Nuten (34) eintritt, so dass beide von ihnen fixiert und gebildet sind, wobei
das Drehglied (3) ein Nockenstück ist, bei dem die umfänglich geformte Außenumfangsfläche bzw. -oberfläche (32) das innere Loch (31) umgibt und ein Nockenprofil (33) sich zu dieser Außenumfangsfläche (32) fortsetzt und nach außen ragt, indem die Antriebswelle (2) in das innere Loch (31) eingesetzt ist, wobei das Nockenstück (3) auf dem inneren Loch (31) befestigt ist, um eine Nockenwelle (1) zu bilden,
**dadurch gekennzeichnet, dass**
an einem Abschnitt des inneren Lochs (31), der einwärts von einer Stelle positioniert ist, wo eine umfänglich geformte Außenumfangsfläche (32) sich zu dem Nockenprofil (33) fortsetzt, ein Austrittsabschnitt (37) mit großem Durchmesser gebildet ist, um einen Kontakt mit der Außenumfangsfläche der Antriebswelle (2) zu verhindern, wenn das Nockenstück (3) an der Antriebswelle (2) befestigt ist.

2. Drehanordnung nach Anspruch 1, **dadurch gekennzeichnet, dass** eine Härte des inneren Lochs (31) des Nockenstücks (3) höher ist als die Härte der Außenumfangsfläche der Antriebswelle (2).

3. Drehanordnung nach Anspruch 1 oder 2, **dadurch gekennzeichnet, dass** die Mehrzahl von Nuten (34) in dem inneren Loch (31) gebildet ist.

4. Drehanordnung nach Anspruch 1 oder 2, **dadurch gekennzeichnet, dass** die Mehrzahl von Nuten (34) an der Außenumfangsfläche (32) der Antriebswelle (2) gebildet ist.

5. Herstellungsverfahren für eine Drehanordnung (1), bei der ein Drehglied (3) an einer Welle (2) fixiert bzw. befestigt wird, indem die Welle (2) in ein inneres Loch (31) des Drehglieds (3) eingesetzt wird, wobei:
ein Durchmesser (d) des inneren Lochs (31) kleiner ausgebildet wird als ein Außendurchmesser eines Einsetzabschnitts der Welle (1), eine Mehrzahl von Nuten bzw. Rillen (34), die sich in der Einsetzrichtung erstrecken, an einem von dem inneren Loch (31) und einer Außenumfangsfläche bzw. -oberfläche der Welle (1) gebildet werden, nachdem der Durchmesser (d) des inneren Lochs (31) durch Erwärmen des Drehglieds (3) geweitet wird, die Welle (2) in das innere Loch (31) eingesetzt und abgekühlt wird, um den Durchmesser des inneren Lochs wieder zu verringern, der andere des inneren Lochs (31) und der Außenumfangsfläche der Welle von dem anderen Teil gepresst und angehoben wird und in die Nuten (34) eintritt, so dass beide von ihnen fixiert werden, und
wobei das Drehglied (3) ein Nockenstück ist, bei dem die umfänglich geformte Außenumfangsfläche bzw. -oberfläche (32) das innere Loch (31) umgibt und ein Nockenprofil (33) sich zu dieser Außenumfangsfläche (32) fortsetzt und nach außen ragt, indem die Antriebswelle (2) in das innere Loch (31) eingesetzt wird, wobei das Nockenstück (3) auf dem inneren Loch (31) befestigt wird, um eine Nockenwelle (1) zu bilden,
**dadurch gekennzeichnet, dass**
an einem Abschnitt des inneren Lochs (31), der einwärts von einer Stelle positioniert ist, wo eine umfänglich geformte Außenumfangsfläche (32) sich zu dem Nockenprofil (33) fortsetzt, ein Austrittsabschnitt (37) mit großem Durchmesser gebildet ist, um einen Kontakt mit der Außenumfangsfläche der Antriebswelle (2) zu verhindern, wenn das Nockenstück (3) an der Antriebswelle (2) befestigt ist.

6. Herstellungsverfahren nach Anspruch 5, wobei das Nockenstück (3) und die Antriebswelle (2) derart hergestellt werden, dass eine Härte des inneren Lochs (31) des Nockenstücks (3) höher ist als die Härte der Außenumfangsfläche (32) der Antriebswelle (2).

7. Herstellungsverfahren nach Anspruch 5 oder 6, **dadurch gekennzeichnet, dass** die Mehrzahl von Nuten (34) in dem inneren Loch (31) gebildet ist.

8. Herstellungsverfahren nach Anspruch 5 oder 6, **dadurch gekennzeichnet, dass** die Mehrzahl von Nuten (34) an der Seite der Außenumfangsfläche (32) der Antriebswelle (2) gebildet ist.

9. Herstellungsverfahren nach einem der Ansprüche 5 bis 8, wobei der Schritt des Bildens einer Mehrzahl von Nuten (34) das Bilden der Mehrzahl von Nuten (34) auf einer mit einer Trapezform, einer Kreisform und einer Dreiecksform beinhaltet.

## Revendications

1. Groupe rotatif (1) dans lequel un élément rotatif (3) est fixé sur un arbre (2) en insérant l'arbre (2) dans un orifice interne (31) de l'élément rotatif (3), dans lequel :
un diamètre (d) de l'orifice interne (31) est formé plus petit qu'un diamètre externe d'une portion d'insertion de l'arbre (1), et une pluralité de rainures (34) s'étendant dans la direction d'insertion est formée sur un élément parmi l'orifice interne (31) et une surface circonférentielle externe de l'arbre (1) ;
après expansion du diamètre (d) de l'orifice interne (31) en chauffant l'élément rotatif (3), l'arbre (2) est inséré dans l'orifice interne (31) et refroidi pour réduire de nouveau le diamètre de l'orifice interne, l'autre élément parmi l'orifice interne (31) et la surface circonférentielle externe de l'arbre est enfoncé et relevé par l'autre partie et pénètre dans les rainures (34) de sorte que les deux éléments sont fixés et formés, dans lequel
l'élément rotatif (3) est un morceau de came ayant la surface circonférentielle externe (32) de forme circonférentielle entourant l'orifice interne (31) et un profil de came (33) continuant vers cette surface circonférentielle externe (32) et
faisant saillie vers l'extérieur et, en insérant l'arbre d'entraînement (2) dans l'orifice interne (31), le morceau de came (3) est fixé sur l'orifice interne (31) de manière à former un arbre à cames (1),
**caractérisé en ce que**
au niveau d'une portion dans l'orifice interne (31) positionnée vers l'intérieur d'un emplacement où une surface circonférentielle externe (32) de forme circonférentielle continue vers le profil de came (33), une portion de décharge de grand diamètre (37) est formée pour empêcher le contact avec la surface circonférentielle externe de l'arbre d'entraînement (2) lorsque le morceau de came (3) est fixé à l'arbre d'entraînement (2).

2. Groupe rotatif selon la revendication 1, **caractérisé en ce qu'**une dureté de l'orifice interne (31) du morceau de came (3) est supérieure à la dureté de la surface circonférentielle externe de l'arbre d'entraînement (2).

3. Groupe rotatif selon la revendication 1 ou 2, **caractérisé en ce que** la pluralité de rainures (34) est formée dans l'orifice interne (31).

4. Groupe rotatif selon la revendication 1 ou 2, **caractérisé en ce que** la pluralité de rainures (34) est formée sur la surface circonférentielle externe (32) de l'arbre d'entraînement (2).

5. Procédé de fabrication d'un groupe rotatif (1) dans lequel un élément rotatif (3) est fixé sur un arbre (2) en insérant l'arbre (2) dans un orifice interne (31) de l'élément rotatif (3), dans lequel :
un diamètre (d) de l'orifice interne (31) est formé plus petit qu'un diamètre externe d'une portion d'insertion de l'arbre (2), une pluralité de rainures (34) s'étendant dans la direction d'insertion est formée sur un élément parmi l'orifice interne (31) et une surface circonférentielle externe de l'arbre (2), après expansion du diamètre (d) de l'orifice interne (31) en chauffant l'élément rotatif (3), l'arbre (2) est inséré dans l'orifice interne (31) et refroidi pour réduire de nouveau le diamètre (d) de l'orifice interne (31), l'autre élément parmi l'orifice interne et la surface circonférentielle externe de l'arbre (2) est enfoncé et relevé par l'autre partie et pénètre dans les rainures (34) de sorte que les deux éléments sont fixés, et
dans lequel l'élément rotatif (3) est un morceau de came ayant la surface circonférentielle externe (32) de forme circonférentielle entourant l'orifice interne (31) et un profil de came (33) continuant vers cette surface circonférentielle externe (32) et faisant saillie vers l'extérieur et, en insérant l'arbre d'entraînement (2) dans l'orifice interne (31), le morceau de came (3) est fixé sur l'orifice interne (31) de manière à former un arbre à cames (1),
**caractérisé en ce que**
au niveau d'une portion dans l'orifice interne (31) positionnée vers l'intérieur d'un emplacement où une surface circonférentielle externe (32) de forme circonférentielle continue vers le profil de came (33), une portion de décharge de grand diamètre (37) est formée pour empêcher le contact avec la surface circonférentielle externe de l'arbre d'entraînement (2) lorsque le morceau de came (3) est fixé à l'arbre d'entraînement (2).

6. Procédé de fabrication selon la revendication 5, dans lequel le morceau de came (3) et l'arbre d'entraînement (2) sont produits de sorte qu'une dureté de l'orifice interne (31) du morceau de came (3) est supérieure à la dureté de la surface circonférentielle externe (32) de l'arbre d'entraînement (2).

7. Procédé de fabrication selon la revendication 5 ou 6, **caractérisé en ce que** la pluralité de rainures (34) est formée dans l'orifice interne (31).

8. Procédé de fabrication selon la revendication 5 ou 6, **caractérisé en ce que** la pluralité de rainures (34) est formée sur le côté de la surface circonférentielle externe (32) de l'arbre d'entraînement (2).

9. Procédé de fabrication selon l'une quelconque des revendications 5 à 8, dans lequel l'étape de formation d'une pluralité de rainures (34) inclut la formation de la pluralité de rainures (34) à partir d'une forme parmi une forme trapézoïdale, une forme circulaire et une forme triangulaire.
